# EUROPÄISCHE PATENTANMELDUNG

(11) **EP 4 015 190 A1**
(43) Veröffentlichungstag der Anmeldung: **22.06.2022**
(21) Anmeldenummer: 21211043.1
(22) Anmeldetag: 29.11.2021
(51) Int. Cl.: B29C 48/37, B29C 48/375, B29C 48/465, B29B 7/52, B29K 7/00

(54) **VERFAHREN UND VORRICHTUNG ZUR VERARBEITUNG EINER LAUFSTREIFENKAUTSCHUKMISCHUNG FÜR EINEN FAHRZEUGREIFEN**

(30) Priorität: 21.12.2020 DE 102020216368
(71) Anmelder: Continental Reifen Deutschland GmbH, 30165 Hannover (DE)
(72) Erfinder: Sharifi, Monir, 30165 Hannover (DE)
(74) Vertreter: Continental Corporation

(57) **Zusammenfassung**

Die Erfindung betrifft ein Verfahren zur Verarbeitung einer Laufstreifenkautschukmischung für einen Fahrzeugreifen, umfassend folgende Schritte: Einen ersten Verarbeitungsschritt, indem mindestens eine Kautschukmischung 8 in mindestens einem Extruder 2 extrudiert wird, einen zweiten Verarbeitungsschritt, indem die extrudierte Kautschukmischung 8' plastifiziert und/oder erwärmt wird und einen finalen Verarbeitungsschritt, indem die Kautschukmischung in mindestens einer Zahnradpumpe 5 final verarbeitet wird, wobei die Kautschukmischung in einer in die Zahnradpumpe 5 integrierte vorgelagerte Einspeiseeinrichtung 6 verarbeitet und in die Zahnradpumpe 5 eingespeist wird. Ferner betrifft die Erfindung eine Vorrichtung 1 zur Verarbeitung einer Laufstreifenkautschukmischung für einen Fahrzeugreifen, vorzugsweise unter Anwendung eines beschriebenen Verfahrens, umfassend mindestens einen Extruder 2 zum Extrudieren einer Kautschukmischung, mindestens eine Walzenanordnung 2, 3 zum Plastifizieren und/oder Vorerwärmen der extrudierten Kautschukmischung 8', wobei die Vorrichtung 1 mindestens eine Zahnradpumpe 5 mit mindestens eine in die Zahnradpumpe 5 integrierte vorgelagerte Einspeiseeinrichtung 6 umfasst, wobei die Einspeiseeinrichtung 6 dazu eingerichtet ist, eine vorgewärmte extrudierte Kautschukmischung 8" direkt in die Zahnradpumpe 5 einzuspeisen.

## Beschreibung

Die Erfindung betrifft ein Verfahren zur Verarbeitung einer Laufstreifenkautschukmischung für einen Fahrzeugreifen gemäß dem Oberbegriff des Patentanspruchs 1. Ferner betrifft die Erfindung eine Vorrichtung zur Verarbeitung einer Laufstreifenkautschukmischung für einen Fahrzeugreifen gemäß dem Oberbegriff des Patentanspruchs 6.

Bei der Reifenherstellung eines Laufstreifens, insbesondere mit hohem Naturkautschukanteil, durchläuft eine Kautschukmischung üblicherweise mehrere Verarbeitungsschritte, um in einem finalen Schritt eine im Wesentlichen finale Laufstreifengeometrie zu erhalten.

Zu Beginn des Verarbeitungsprozesses wird die Kautschukmischung dafür zunächst in einem Extruder extrudiert. Anschließend wird die extrudierte Kautschukmischung über Walzen in Form gebracht und weiterverarbeitet. Im Stand der Technik wird die Kautschukmischung dann in einem finalen Schritt in einem Extruder extrudiert, um die im Wesentlichen finale Laufstreifengeometrie zu erhalten. Nachteilig gegenüber einer solchen Anordnung und einem solchen Verfahren ist, dass die finale Kautschukmischung pulsiert wird. Das Problem der Pulsation an einem Extruder ist nachteilig und bauartbedingt. Bauartbedingt liegen am Extruderausgang keine konstanten Druckverhältnisse vor, sodass die finale Kautschukmischung keine finale gleichmäßige Geometrie aufweist.

Hier setzt die vorliegende Erfindung an. Der Erfindung liegt der Aufgabe zugrunde, ein Verfahren bereitzustellen, durch das eine verbesserte Laufstreifengeometrie erzielt werden kann. Ferner liegt der Erfindung die Aufgabe zugrunde, eine Vorrichtung bereitzustellen, durch die eine verbesserte Laufstreifengeometrie erzielt werden kann.

Gelöst wird die Aufgabe durch ein Verfahren zur Verarbeitung einer Kautschukmischung, insbesondere mit hohem Naturkautschukanteil, mit den Merkmalen des Patentanspruchs 1, sowie durch eine Vorrichtung zur Verarbeitung einer Kautschukmischung, insbesondere mit hohem Naturkautschukanteil, mit den Merkmalen des Patentanspruchs 6.

Gelöst wird die Aufgabe durch ein Verfahren zur Verarbeitung einer Laufstreifenkautschukmischung für einen Fahrzeugreifen, insbesondere mit einem hohen Anteil an Naturkautschuk, gekennzeichnet durch folgende Schritte:
- Einen ersten Verarbeitungsschritt, indem mindestens eine Kautschukmischung in mindestens einem Extruder extrudiert wird,
- Einen zweiten Verarbeitungsschritt, indem die extrudierte Kautschukmischung plastifiziert und/oder erwärmt wird und
- Einen finalen Verarbeitungsschritt, indem die Kautschukmischung in mindestens einer Zahnradpumpe final verarbeitet wird, wobei die Kautschukmischung in einer in die Zahnradpumpe integrierte vorgelagerte Einspeiseeinrichtung verarbeitet und in die Zahnradpumpe eingespeist wird.

Ein Vorteil der vorliegenden Erfindung ist die deutlich verbesserte Laufstreifengeometrie, die durch das erfindungsgemäße Verfahren erzielt wird. Die Kombination der Zahnradpumpe mit der vorgelagerten Einspeiseeinrichtung führt im finalen Verarbeitungsschritt erfindungsgemäß zu einer verringerten Pulsation der finalen Laufstreifenstreifenkautschukmischung. Vorteilhaft sind die Druckverhältnisse am Ausgang der Zahnradpumpe deutlich konstanter als bei einem derzeitig eingesetzten Extruder, wodurch die Laufstreifenkautschukmischung erfindungsgemäß eine gleichmäßige Laufstreifengeometrie erhält. Die vorgelagerte Einspeiseeinrichtung führt vorteilhafterweise verfahrenstechnisch zu einer deutlich besseren Verarbeitbarkeit der Kautschukmischung. Eine verbesserte Verarbeitbarkeit ist wesentlich für das Verarbeiten in der Zahnradpumpe, damit die Laufstreifenkautschukmischung eine verbesserte Laufstreifengeometrie erhält.

Der finale Verarbeitungsschritt zeichnet sich dadurch aus, dass die Kautschukmischung im finalen Verarbeitungsschritt die im Wesentlichen finale Geometrie eines Laufstreifenprofils erreicht. Am Ausgang der erfindungsgemäßen Zahnradpumpe wird somit ein verbesserter extrudierter verarbeiteter Kautschukendlosstreifen mit einem Laufstreifenprofil erzeugt.

Erfindungsgemäß ist die Einspeiseeinrichtung der Zahnradpumpe vorgelagert, wodurch die Kautschukmischung in einem finalen Verfahrensschritt final verarbeitet werden kann. Die Kautschukmischung wird in der Einspeiseeinrichtung verarbeitet und direkt von der Einspeiseeinrichtung in die Zahnradpumpe eingespeist. Vorzugsweise bildet die Einspeiseeinrichtung mit der Zahnradpumpe eine Anlage, in der die Mischung nicht separat in die Zahnradpumpe gefördert wird oder weitere manuelle Schritte zur Verarbeitung notwendig sind. In einer solchen Ausführungsform ist die Einspeiseeinrichtung in die Zahnradpumpe integriert, wodurch die Kautschukmischung im finalen Verarbeitungsschritt direkt in die Zahnradpumpe eingespeist werden kann. Vorteilhafterweise kann die Temperatur der Kautschukmischung besser eingestellt und konstant gehalten werden. Dies ist letztendlich von Vorteil, um am Ausgang der Zahnradpumpe eine konstante finale Laufstreifengeometrie zu erhalten. Zusätzlich fallen mögliche Schwankungen, wie beispielsweise die Pulsation, die durch den Einsatz eines Extruders entsteht, weg.

Die Zahnradpumpe weist naturgemäß mindesten zwei Zahnräder auf. Denkbar sind mindestens drei oder mindestens vier Zahnräder. Eine erhöhte Anzahl an Zahnrädern führt zu einer deutlich verbesserten Kontrolle der Laufstreifengeometrie am Ausgang der Zahnradpumpe. Von Vorteil ist ebenfalls, dass die Kautschukmischung durch mehrere Zahnräder gestaucht oder gestreckt werden kann. Dies erfolgt, in dem die Geschwindigkeit der Zahnräder individuell angepasst wird, wodurch die Eigenschaften der finalen Laufstreifenkautschukmischung variiert werden kann.

In einer bevorzugten Ausführungsform richtet sich das Verfahren zur Verarbeitung einer Laufstreifenkautschukmischung für einen Fahrzeugreifen mit einem hohen Anteil an Naturkautschuk. Das Problem der gravimetrischen und geometrischen Extrudat-Schwankung tritt insbesondere bei Kautschukmischungen mit einem hohen Anteil an Naturkautschuk auf. Vorteilhaft kann durch ein Verfahren mit den beschriebenen Merkmalen der Effekt der Schwankung signifikant verringert und eine regelmäßige Pulsation eliminiert werden, wodurch sich die Laufstreifengeometrie des Fahrzeugreifens deutlich verbessert wird. Die Verbesserung lässt sich auch in der Reifenperformance weiderfinden (z.B. Rundlauf/Tire Uniformity).

In einer bevorzugten Ausführungsform ist die mindestens eine Einspeiseeinrichtung eine Walzenanordnung oder ein Extruder. Vorteilhafterweise wird die Kautschukmischung über die Walzenanordnung oder den Extruder in die Zahnradpumpe eingespeist. Die Walzenanordnung weist üblicherweise mindestens zwei Walzen auf, durch die die Kautschukmischung vorgeformt und/oder einer Temperaturerhöhung unterworfen wird. Die Verarbeitung erfolgt üblicherweise durch Längswalzen. Beim Längswalzen wird das Walzgut senkrecht zu den Walzenachsen ohne Drehung um die eigene Achse durch den Walzspalt bewegt und somit verarbeitet. Denkbar sind allerdings auch dreifache, vierfache, fünffache oder sechsfache Walzenanordnungen. Alternativ zur Walzenanordnung ist ein vorgelagerter Extruder mit einer Schnecke denkbar. Die Kautschukmischung wird in dieser Ausführungsform direkt vom Extruder in die Zahnradpumpe eingespeist. Durch den Extruder wird die Kautschukmischung soweit vorgewärmt und verarbeitet, dass diese in der Zahnradpumpe in Bezug auf die Laufstreifengeometrie optimal final verarbeitet werden kann.

Weiter bevorzugt wird die extrudierte Kautschukmischung im zweiten Verarbeitungsschritt durch mindestens eine Walzenanordnung plastifiziert und/oder erwärmt. Vorteilhafterweise kann die Kautschukmischung im zweiten Verarbeitungsschritt bereits individuell bezüglich der Temperatur und der Geometrie für den finalen Verarbeitungsschritt eingestellt werden. Dazu wird die extrudierte Kautschukmischung durch mindestens eine Walzenanordnung geführt. Üblicherweise wird die Mischung dabei bevorzugt auf eine Temperatur von 50 °C bis 100 °C erwärmt.

In einer weiteren bevorzugten Ausführungsform wird die Zahnradpumpe und/oder die Einspeiseeinrichtung mittels einer Regulierungseinheit reguliert. Die Regulierungseinheit kann beispielsweise die Temperatur in der Zahnradpumpe oder der Einspeiseeinrichtung über die Geschwindigkeit der Zahnräder oder der Walzen regulieren. Denkbar ist, dass die Regulierungseinheit mit der Zahnradpumpe und der Einspeiseeinrichtung gekoppelt ist, sodass die Eigenschaften der Kautschukmischung in Bezug auf die Verarbeitbarkeit individuell angepasst werden können.

In einer bevorzugten Ausführungsform wird die finale Laufstreifenkautschukmischung durch mindestens eine Schablone, insbesondere eine Vorschablone und eine Endschablone, im Bereich der Ausgangsdüse der Zahnradpumpe final geformt. Die finale Laufstreifenkautschukmischung ist üblicherweise als endloser extrudierter Streifen ausgebildet. Dieser finale Verarbeitungsprozess wird durch eine Schablone im Bereich der Ausgangsdüse final erreicht. Die Schablone ist dafür so ausgebildet, dass die Kautschukmischung die Geometrie des Laufstreifenprofils annimmt, wenn diese über die Zahnräder durch die Ausgangsdüse hindurchgefördert wird.

Ferner wird die Aufgabe der Erfindung durch eine Vorrichtung zur Verarbeitung einer Laufstreifenkautschukmischung für einen Fahrzeugreifen gelöst, insbesondere mit einem hohen Anteil an Naturkautschuk, umfassend mindestens einen Extruder zum Extrudieren einer Kautschukmischung, mindestens eine Walzenanordnung zum Plastifizieren und/oder Vorerwärmen der extrudierten Kautschukmischung, wobei das System mindestens eine Zahnradpumpe mit mindestens einer vorgelagerte Einspeiseeinrichtung umfasst, vorzugsweise mit einer beschriebenen Vorrichtung, wobei die Einspeiseeinrichtung dazu eingerichtet ist, eine vorgewärmte plastifizierte Kautschukmischung direkt in die Zahnradpumpe einzuspeisen.

Vorteilhaft ist, dass die Kombination der Zahnradpumpe mit der vorgelagerten Einspeiseeinrichtung im finalen Verarbeitungsschritt erfindungsgemäß zu einer verringerten Schwankung und Eliminierung der regelmäßigen Pulsation der Laufstreifenstreifenkautschukmischung führt. Vorteilhafterweise kann der Prozess der Verarbeitung einer Laufstreifenkautschukmischung durch die erfindungsgemäße Vorrichtung in Bezug auf die Laufstreifengeometrie deutlich verbessert werden. Weitere Vorteile, die sich auf das erfindungsgemäße Verfahren beziehen, beziehen sich ebenfalls auf die erfindungsgemäße Vorrichtung. Zusätzlich gelten alle weiteren Ausführungen in Bezug auf das Verfahren, vice versa, für die erfindungsgemäße Vorrichtung. Bevorzugt ist die Vorrichtung nur unter Anwendung des erfindungsgemäßen Verfahrens durchführbar.

In einer bevorzugten Weiterbildung ist zwischen dem mindestens einem Extruder und der mindestens einen Walzenanordnung und/oder zwischen der mindestens einen Walzenanordnung und der Einspeiseeinrichtung mindestens eine Fördervorrichtung, angeordnet. Bevorzugt ist die Fördervorrichtung zumindest ein Förderband, wobei andere Vorrichtungen denkbar sind, die die verarbeitete Kautschukmischung extrudiert oder plastifiziert und vorerwärmt zum nächsten Prozessschritt fördert.

In einer bevorzugten Weiterbildung der Erfindung umfasst die mindestens eine Einspeiseeinrichtung eine Walzenanordnung oder einen Extruder. Vorteilhafterweise kann die vorgelagerte Einspeisung der Kautschukmischung über die Walzenanordnung oder den Extruder zuerst verarbeitet erfolgen, bevor diese direkt in die Zahnradpumpe eingespeist wird. Es hat sich gezeigt, dass die Verarbeitbarkeit der Kautschukmischung in der Zahnradpumpe deutlich besser ist, wenn diese in einem direkten vorgelagerten Schritt vorbehandelt wurde. Außerdem kann die Kautschukmischung in der vorgelagerten Walzenanordnung oder dem Extruder auf eine bestimmte Temperatur erwärmt werden. Dieser Erwärmungsschritt unterscheidet sich von anderen Erwärmungsschritten dahingehend, dass die erwärmte Kautschukmischung direkt in die Zahnradpumpe eingespeist werden kann, ohne dass diese wieder erkaltet.

Weiter bevorzugt weist die Zahnradpumpe ein Gehäuse mit mindestens einer Eingangsöffnung und mindestens einer Ausgangsöffnung auf, wobei an der Ausgangsöffnung mindestens eine Schablone, insbesondere eine Vorschablone und eine Endschablone, angeordnet ist. Vorteilhafterweise ist die Zahnradpumpe und die vorgelagerter Einspeiseeinrichtung in einem Gehäuse angeordnet, sodass die Einspeisung direkt erfolgen kann. Die Schablone formt die Kautschukmischung vorteilhafterweise aus, sodass die finale Geometrie erreicht werden kann. Die Schablone weist dazu vorzugsweise mindestens eine Öffnung oder ein Fließkanal auf, durch die die Kautschukmischung geformt wird. Die Schablone kann beispielsweise eine Vorschablone oder eine Endschablone sein. Die Vorschablone führt die Kautschukmischung als Streifen zusammen und die Endschablone verbindet diese miteinander. Vorteilhafterweise kann eine solche Schablone zu einer gewünschten finalen Form führen.

Weitere Vorteile und Merkmale des erfindungsgemäßen Verfahrens sowie der Vorrichtung ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, soweit diese technisch möglich sind, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar, soweit diese technisch möglich sind. Dies gilt auch für die einzelnen Merkmale der nachfolgend diskutierten Ausführungsbeispiele, soweit diese nicht für den Fachmann als zwingend zueinander gehörig erkennbar sind.

### Figurenbeschreibung

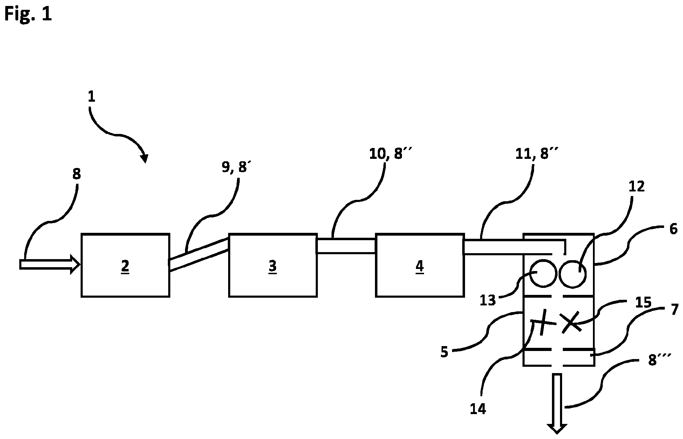

Weitere Einzelheiten und Vorteile der vorliegenden Erfindung ergeben sich aus der nachfolgenden Beschreibung des Ausführungsführungsbeispiels in Verbindung mit der Zeichnung. In dieser zeigt
- Figur 1: in schematischer Ansicht eine Ausführungsform eines erfindungsgemäßen Systems unter Anwendung eines erfindungsgemäßen Verfahrens, umfassend einen Extruder, zwei Walzenanordnungen und eine Zahnradpumpe mit vorgelagerter integrierten Walzenanordnung.

Figur 1 zeigt in schematischer Ansicht eine Ausführungsform des erfindungsgemäßen Systems 1 mit einem Extruder 2, einer ersten Walzenanordnung 3, einer zweiten Walzenanordnung 4 und eine Zahnradpumpe 5 mit einer vorgelagerten integrierten Walzenanordnung 6, wobei am Ausgang der Zahnradpumpe 5 eine Endschablone 7 angeordnet ist.

In den Extruder 2 wird in einem ersten Verarbeitungsschritt eine Kautschukmischung 8 eingeführt, die durch eine Schnecke im Extruder 2 extrudiert wird. Anschließend wird die extrudierte Kautschukmischung 8' über ein erstes Förderband 9 in die erste Walzenanordnung 3 gefördert, in der die extrudierte Kautschukmischung 8' in einem zweiten Verarbeitungsschritt plastifiziert und/oder aufgewärmt wird. Danach wird die aufgewärmte extrudierte Kautschukmischung 8" auf einem zweiten Förderband 10 in die zweite Walzenanordnung 4 gefördert, in der die Kautschukmischung 8" in einem dritten Verarbeitungsschritt zusätzlich plastifiziert und aufgewärmt wird. Im Anschluss daran wird die Kautschukmischung 8" über eine drittes Förderband 11 in die der Zahnpumpe 5 vorgelagerten integrierten Walzenanordnung 6 mit zwei Walzen 12, 13 gefördert. In der Walzenanordnung 6 wird die Kautschukmischung 8" in einem finalen Verarbeitungsschritt vorbehandelt, wobei die Walzenanordnung 6 im Wesentlichen der direkten Einspeisung dient. Die Kautschukmischung 8" wird dann direkt durch die Zahnradpumpe 6 durch zwei Zahnrädern 14, 15 gefördert. Die Kautschukmischung 8" erhält letztendlich die finale Laufstreifengeometrie in Form eines endlosen Kautschukstreifens 8‴, indem diese kontinuierlich durch die Endschablone 7 gefördert wird.

### Bezugszeichenliste

- 1: Vorrichtung
- 2: Extruder
- 3: erste Walzenanordnung
- 4: zweite Walzenanordnung
- 5: Zahnradpumpe
- 6: Walzenanordnung
- 7: Endschablone
- 8: Kautschukmischung
- 8′: extrudierte Kautschukmischung
- 8ʺ: aufgewärmte extrudierte Kautschukmischung
- 8‴: endloser Kautschukstreifen
- 9: erste Förderband
- 10: zweite Förderband
- 11: dritte Förderband
- 12: erste Walze
- 13: zweite Walze
- 14: erste Zahnrad
- 15: zweite Zahnrad

## Patentansprüche

1. Verfahren zur Verarbeitung einer Laufstreifenkautschukmischung für einen Fahrzeugreifen,
**gekennzeichnet durch** folgende Schritte:
- Einen ersten Verarbeitungsschritt, indem mindestens eine Kautschukmischung (8) in mindestens einem Extruder (2) extrudiert wird,
- Einen zweiten Verarbeitungsschritt, indem die extrudierte Kautschukmischung (8') plastifiziert und/oder erwärmt wird und
- Einen finalen Verarbeitungsschritt, indem die Kautschukmischung in mindestens einer Zahnradpumpe (5) final verarbeitet wird, wobei die Kautschukmischung in einer in die Zahnradpumpe (5) integrierte vorgelagerte Einspeiseeinrichtung (6) verarbeitet und in die Zahnradpumpe (5) eingespeist wird.

2. Verfahren nach Anspruch 1, **dadurch gekennzeichnet, dass** die mindestens eine Einspeiseeinrichtung (5) eine Walzenanordnung oder ein Extruder ist.

3. Verfahren nach Anspruch 1 oder 2, **dadurch gekennzeichnet, dass** die extrudierte Kautschukmischung (8') im zweiten Verarbeitungsschritt durch mindestens eine Walzenanordnung (3) plastifiziert und/oder erwärmt wird.

4. Verfahren nach einem der vorherigen Ansprüche, **dadurch gekennzeichnet, dass** die Zahnradpumpe (5) und/oder die Einspeiseeinrichtung (5) mittels einer Regulierungseinheit reguliert wird.

5. Verfahren nach einem der vorherigen Ansprüche, **dadurch gekennzeichnet, dass** die finale Laufstreifenkautschukmischung durch mindestens eine Schablone (7), insbesondere eine Vorschablone und eine Endschablone, im Bereich der Ausgangsdüse der Zahnradpumpe (5) final geformt wird.

6. Vorrichtung (1) zur Verarbeitung einer Laufstreifenkautschukmischung für einen Fahrzeugreifen, vorzugsweise unter Anwendung eines Verfahrens nach einem der Ansprüche 1 bis 5, umfassend mindestens einen Extruder (2) zum Extrudieren einer Kautschukmischung, mindestens eine Walzenanordnung (2, 3) zum Plastifizieren und/oder Vorerwärmen der extrudierten Kautschukmischung (8'),
**dadurch gekennzeichnet, dass**
die Vorrichtung (1) mindestens eine Zahnradpumpe (5) mit mindestens eine in die Zahnradpumpe (5) integrierte vorgelagerte Einspeiseeinrichtung (6) umfasst, wobei die Einspeiseeinrichtung (6) dazu eingerichtet ist, eine vorgewärmte extrudierte Kautschukmischung (8") direkt in die Zahnradpumpe (5) einzuspeisen.

7. Vorrichtung (1) nach Anspruch 6, **dadurch gekennzeichnet, dass** zwischen dem mindestens einem Extruder (2) und der mindestens einen Walzenanordnung (3, 4) und/oder zwischen der mindestens einen Walzenanordnung (4) und der Einspeiseeinrichtung (6) mindestens eine Fördervorrichtung (9, 10, 11), insbesondere ein Förderband, angeordnet ist.

8. Vorrichtung (1) nach Anspruch 6 oder 7, **dadurch gekennzeichnet, dass** die mindestens eine Einspeiseeinrichtung (6) eine Walzenanordnung oder einen Extruder umfasst.

9. Vorrichtung (1) nach einem der Ansprüche 6 bis 8, **dadurch gekennzeichnet, dass** die Zahnradpumpe (5) ein Gehäuse mit mindestens einer Eingangsöffnung und mindestens einer Ausgangsöffnung aufweist, wobei an der Ausgangsöffnung mindestens eine Schablone (7) angeordnet ist.

10. Vorrichtung (1) nach einem der Ansprüche 6 bis 9, **dadurch gekennzeichnet, dass** die Zahnradpumpe (5) am Ausgang mindestens eine Schablone (7) aufweist, durch die die verarbeitete Kautschukmischung final geformt wird.
